# FASCICULE DE BREVET EUROPEEN

(11) **EP 2 497 976 B1**
(45) Date de publication et mention de la délivrance du brevet: **10.08.2016**
(21) Numéro de dépôt: 12158148.2
(22) Date de dépôt: 05.03.2012
(51) Int. Cl.: F16J 15/06, F16L 13/14, F16J 15/16

(54) **Joint d'étanchéité**
Dichtungsfuge
Sealing gasket

(30) Priorité: 11.03.2011 FR 1152009
(43) Date de publication de la demande: 12.09.2012
(73) Titulaire: COMAP, 69008 Lyon (FR)
(72) Inventeur: Le Clinche, Pascal, 45000 Orleans (FR)
(74) Mandataire: Verriest, Philippe

(56) Documents cités:
- EP-A1- 1 249 655
- EP-A1- 1 927 804
- JP-A- 2004 108 448

## Description

La présente invention a pour objet un joint annulaire d'étanchéité et de contrôle destiné d'une part à réaliser l'étanchéité entre un tube et une pièce de raccord après une étape de sertissage entre le tube et la pièce de raccord, le tube étant destiné à véhiculer un fluide, ledit joint d'étanchéité étant destiné d'autre part à ménager une fuite d'étanchéité dudit fluide avant l'étape de sertissage de manière à contrôler la réalisation de l'étape de sertissage (voir EP-A-1249655).

Il est connu du document EP985113 de générer une fuite par la déformation locale sous forme de bombement d'un joint d'étanchéité pour contrôler la réalisation d'une étape de sertissage d'un tube sur une pièce de raccord.

Cependant, ces bombements complexifient considérablement le procédé de fabrication de ces joints

La présente invention a pour but de résoudre tout ou partie des inconvénients mentionnés ci-dessus.

A cet effet, la présente invention a pour objet un joint d'étanchéité du type précité comprenant une section droite principale de contour circulaire, au moins une zone dite de fuite comprenant une pluralité continue de sections droites dont le contour de chacune s'inscrit à l'intérieur du contour circulaire de la section droite principale, et agencée pour former un évidement pour le passage du fluide avant sertissage sur un contour du joint d'étanchéité annulaire, ledit joint étant caractérisé en ce que la profondeur maximale de l'évidement de fuite est telle que l'écart de section entre la section droite principale de contour circulaire et la section droite mesurée au niveau de la profondeur maximale d'une zone de fuite est compris entre 8 et 27% de la section droite principale de contour circulaire et en ce que la profondeur radiale de la pluralité continue de sections droites formant l'au moins un évidement décroit de façon continue depuis un emplacement dans lequel est mesurée la profondeur maximale de l'au moins un évidement jusqu'à au moins un emplacement d'extrémité de l'au moins un évidement dans lequel est mesurée la profondeur minimale de l'au moins un évidement.

Contrairement à ce qui est indiqué dans les documents de l'état de la technique, un joint annulaire d'étanchéité et de contrôle selon l'invention permet d'obtenir une bonne étanchéité sans pour autant devoir conférer un quelconque bombement au joint.

De plus, cette disposition permet d'obtenir un joint de forme simple simplifiant sa fabrication.

Selon un mode de réalisation, l'au moins une zone de fuite est disposée sur le contour intérieur du joint d'étanchéité annulaire.

Selon un mode de réalisation, la profondeur maximale de l'évidement de fuite est comprise entre 8 et 20% de la section droite principale de contour circulaire.

Avantageusement, la profondeur maximale de l'évidement de fuite est telle que l'écart de section est compris entre 11 et 15% de la section droite principale de contour circulaire.

Selon un mode de réalisation, l'au moins une zone de fuite est disposée sur le contour extérieur du joint d'étanchéité annulaire.

Selon un mode de réalisation, la profondeur maximale de l'évidement de fuite est telle que l'écart de section est compris entre 13 et 27% de la section droite principale de contour circulaire.

Avantageusement, la profondeur maximale de l'évidement dé fuite est telle que l'écart de section est compris entre 18 et 22% de la section droite principale de contour circulaire.

Selon un mode de réalisation, le contour de chaque section droite prise dans la zone de fuite comprend une première partie en arc de cercle de rayon de courbure égal à celui du contour circulaire d'une section droite principale et une deuxième partie en arc de cercle de rayon de courbure supérieur à celui du contour circulaire d'une section droite principale.

Selon un mode de réalisation, le joint annulaire d'étanchéité et de contrôle comporte trois zones de fuites dont chacune est séparé d'un écart angulaire de 120° avec les deux autres

La présente invention a également pour objet un raccord comportant au moins un tel joint d'étanchéité.

De toute façon, l'invention sera bien comprise à l'aide de la description qui suit, en référence au dessin schématique annexé représentant, à titre d'exemple non limitatif, un joint d'étanchéité et de contrôle salon l'invention.
La figure 1 montre une vue en perspective d'un joint d'étanchéité et de contrôle selon un premier mode de réalisation de l'invention.
La figure 2 montre une vue en coupe d'un raccord entre un tube et une première pièce de raccord comportant le joint d'étanchéité illustré à la figure 1.
La figure 3 montre des variantes suivant le mode de réalisation du joint d'étanchéité illustré à la figure 1.
La figure 4 montre une vue en perspective d'un joint d'étanchéité et de contrôle selon un deuxième mode de réalisation de l'invention.
La figure 5 montre une vue en coupe d'un raccord entre un tube et une deuxième pièce de raccord comportant le joint d'étanchéité illustré à la figure 4.
La figure 6 montre des variantes suivant le mode de réalisation du joint d'étanchéité illustré à la figure 4.

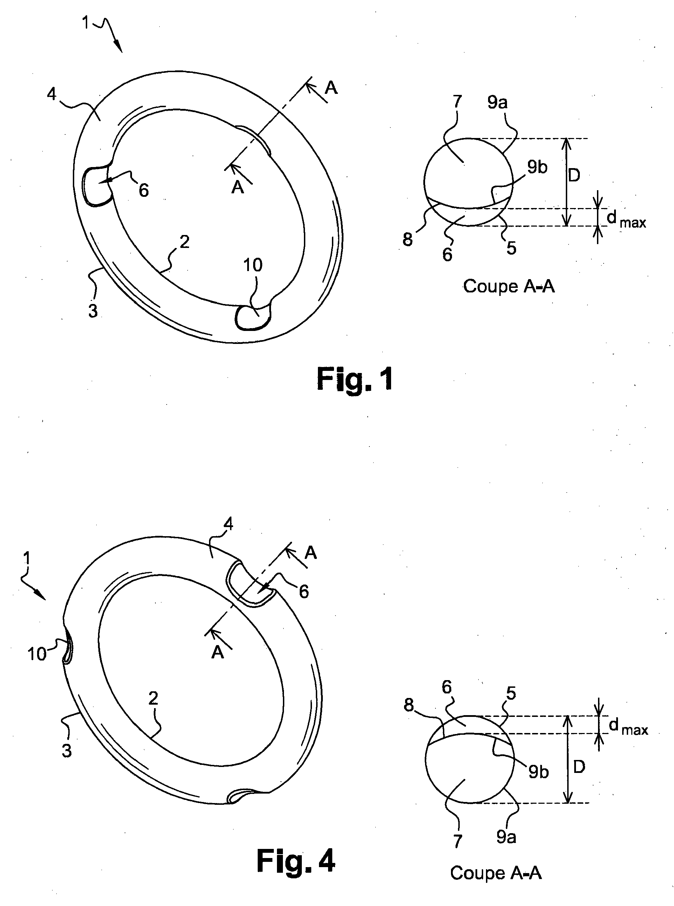

Comme illustré sur les figures 1 et 4, un joint annulaire d'étanchéité et de contrôle 1 comprend une forme générale toroïdale comprenant un contour intérieur 2 et un contour extérieur 3.

Cette forme générale toroïdale comprend une section droite dite principale 4 de contour circulaire 5.

Sur le mode de réalisation illustré à la figure 1, le joint d'étanchéité et de contrôle 1 comporte des zones dites de fuite 6 disposés sur le contour intérieur 2 du joint d'étanchéité 1.

Sur le mode de réalisation illustré à la figure 4, le joint d'étanchéité et de contrôle 1 comporte des zones dites de fuite 6 disposés sur le contour extérieur 3 du joint d'étanchéité 1.

Dans ces deux modes de réalisation présentés aux figures 1 et 4, le joint 1 comprend trois zones de fuite 6 dont chacune forme un écart de 120° avec les deux autres.

De même, dans ces deux modes de réalisation présentés aux figures 1 et 4, les zones de fuite 6 sont chacune inscrites à l'intérieur de la section principale 4 de contour circulaire 5.

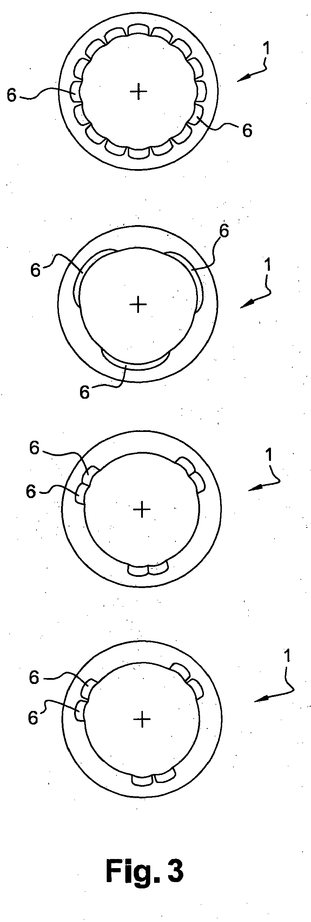

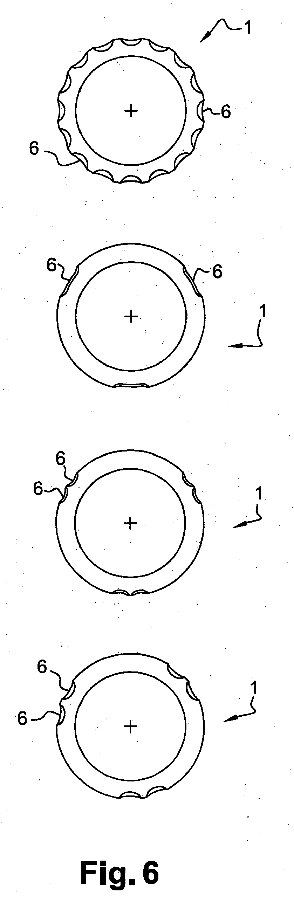

Bien entendu, comme cela est illustré aux figures 3 et 6, le nombre et la disposition de ces zones de fuite 6 peut différer sans pour autant sortir du cadre de l'invention.

Chaque zone de fuite 6 est formée par une pluralité continue de sections droites 7 dont le contour 8 de chacune s'inscrit à l'intérieur du contour circulaire 5 de la section droite principale 4.

La continuité de ces sections droites 7 confère une surface lisse à la zone de fuite 6 en forme de paraboloïde hyperbolique.

Dans sa position de repos avant sertissage, les zones de fuite 6 du joint 1 forment un évidement 10 pour le passage du fluide sur le contour du joint 1 comportant les zones de fuites 6, et plus précisément sur le contour intérieur 2 du joint 1 comme dans le mode de réalisation illustré à la figure 1, ou sur le contour extérieur 3 du joint 1 comme dans le mode de réalisation illustré à la figure 4.

La profondeur maximale dₘₐₓ de ces évidements 10, mesurée radialement depuis le contour intérieur 2 ou depuis le contour extérieur 3 selon que les évidements 10 se trouvent positionnés respectivement sur le contour intérieur 2 ou sur le contour extérieur 3 du joint 1 est telle que l'écart de section entre la section droite principale 4 de contour circulaire 5 et la section droite mesurée au niveau de la profondeur maximale dₘₐₓ d'une zone de fuite est compris entre 8 et 27% de la section droite principale 4 du joint 1.

Plus précisément, dans le premier mode de réalisation présenté à la figure 1, cette profondeur maximale dₘₐₓ est telle que l'écart de section est compris entre 8 et 20% et idéalement entre 11 et 15% de la section droite principale 4 du joint 1.

De même, dans le deuxième mode de réalisation présenté à la figure 4, cette profondeur maximale dₘₐₓ est telle que l'écart de section est compris entre 13 et 27% et idéalement entre 18 et 22%.

Le choix de ces valeurs est décrit plus loin dans le texte.

Cependant, dans tous ces modes réalisation, la profondeur radiale de chaque évidement 10 décroit de façon continue depuis l'emplacement dans lequel est mesurée la profondeur maximale dₘₐₓ de l'évidement 10 jusqu'aux deux emplacements d'extrémité de l'évidement 10 dans lesquels est mesurée la profondeur minimale de l'évidement 10.

De plus, dans ces deux modes de réalisation, l'emplacement dans lequel est mesurée la profondeur maximale de l'évidement 10 est centré par rapport aux deux emplacements dans lesquels sont mesurées les profondeurs minimales de l'évidement 10.

Les figures 1 et 4 illustrent également la coupe du joint 1 sur une zone de fuite 6 selon un plan radial A-A montrant que le contour 8 de chaque section droite 7 prise dans la zone de fuite 6 comprend une première partie 9a en arc de cercle de rayon de courbure égal à celui du contour circulaire 5 d'une section droite principale 4 et une deuxième partie 9b en arc de cercle de rayon de courbure supérieur à celui du contour circulaire 5 d'une section droite principale 4.

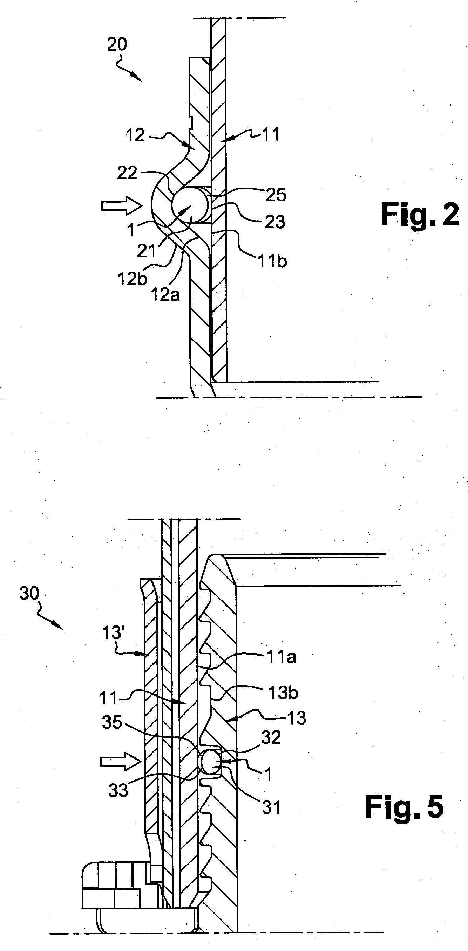

Comme illustré sur les figures 2 et 5, les joints d'étanchéité 1 sont utilisés pour former un raccord 20, 30 entre un tube 11 et une première pièce de raccord 12, ou une deuxième pièce de raccord 13, 13'.

Notamment, le joint 1 est disposé entre un tube intérieur 11 et une pièce de raccord extérieure 12 dans le mode de réalisation illustré à la figure 2 et entre un tube 11 et une pièce de raccord intérieure 13 dans le mode de réalisation illustré à la figure 5.

Le joint 1 présenté dans le premier mode de réalisation illustré à la figure 1 est destiné aux raccords 20 dont le sertissage de la pièce de raccord extérieur 12 est suffisant pour garantir l'étanchéité du joint 1.

Ainsi, ce mode de réalisation du joint 1 est particulièrement adapté aux tubes métalliques.

Ce type de raccord 20 comprend un emplacement 21 pour le joint 1 disposé sur la face intérieure 12a de la pièce de raccord 12.

Cet emplacement 21 comprend une première portée de joint 22 suivant sensiblement la courbure du contour extérieur 3 de la section droite principale 4 du joint 1.

Le contour intérieur 2 sur la section droite principale 4 du joint 1 est au contact d'une deuxième portée de joint 23 disposée sur la face extérieure 11 b du tube 11 Cette deuxième portée de joint 23 suit une direction tangentielle an contour intérieur 2 du joint 1.

Les zones de fuite 6 du joint 1 occupent alors une position les plaçant en regard de la deuxième portée de joint 23 sur la face extérieure 11 b du tube 11.

En outre, le diamètre extérieur du joint 1 est légèrement supérieur au diamètre de la première portée 22 et le diamètre intérieur du joint 1 est légèrement inférieur au diamètre de la deuxième portée 23 de manière à ménager un passage 25 pour le fluide au niveau des zones de fuite 6 avant sertissage.

Le sertissage du raccord 20 consiste à déformer plastiquement la pièce de raccord 12 au niveau de l'emplacement 21 du joint 1 afin de comprimer le joint 1 contre la première portée 22 et contre la deuxième portée 23 afin de garantir l'étanchéité du raccord 20.

Ainsi, avant sertissage le fluide traverse le joint 1 par les passages 25 ménagés entre les zones de fuite 6 du joint 1 et la deuxième portée 23 permettant ainsi de détecter fonctionnellement que le raccord 20 n'a pas été serti.

Lors du sertissage en suivant la flèche sur la figure 2, la déformation plastique de la pièce de raccord 12 entraine une déformation élastique de l'ensemble du joint 1 non seulement dans la direction radiale du joint 1 mais également dans une direction tangentielle au niveau des zones de fuite 6.

Ainsi, la déformation radiale et tangentielle au niveau des zones de fuites 6 obstrue les passages 25 et empêche le fluide de traverser le joint 1 qui devient ainsi étanche.

Cette obstruction des passages 25 est permise de par le choix de la profondeur maximale dₘₐₓ des zones de fuite 6 telle que l'écart de section est compris entre 8 et 20% et idéalement entre 11 et 15% de la section droite principale 4 du joint 1.

Ce choix est donc un compromis entre des passages 25 de dimension suffisante pour permettre la détection d'une fuite de fluide avant le sertissage du raccord 20 et des passages 25 de dimension modeste pour garantir une étanchéité de qualité du raccord 20 après sertissage.

De même, le joint 1 présenté dans le deuxième mode de réalisation illustré à la figure 4 est destiné aux raccords 30 dont le sertissage du tube 11 sur la pièce de raccord intérieure 13 n'est pas suffisant à lui seul pour garantir l'étanchéité du raccord 30.

Ce type de raccord 30 comprend en plus une bague extérieure 13' destinée à être sertie sur le tube 11.

Ainsi, ce mode de réalisation du joint 1 est particulièrement adapté aux tubes multicouches.

Ce type de raccord 30 comprend un emplacement 31 pour le joint 1 disposé sur la face extérieure 13b de la pièce de raccord 13.

Cet emplacement 31 comprend une première portée de joint 32 suivant sensiblement la courbure du contour intérieur 2 de la section droite principale 4 du joint 1.

Le contour extérieur 3 sur la section droite principale 4 du joint 1 est au contact d'une deuxième portée de joint 33 disposée sur la face intérieure 11 a du tube 11 Cette deuxième portée de joint 33 suit une direction tangentielle au contour extérieur 3 du joint 1.

Les zones de fuite 6 du joint 1 occupent alors une position les plaçant en regard de la deuxième portée de joint 33 sur la face intérieure 11a du tube extérieur 11.

En outre, le diamètre extérieur du joint 1 est légèrement supérieur au diamètre de la deuxième portée 33 et le diamètre intérieur du joint 1 est légèrement inférieur au diamètre de la première portée 32 de manière à ménager un passage 35 pour le fluide au niveau des zones de fuite 6 avant sertissage.

Le sertissage du raccord 30 consiste à déformer plastiquement la bague 13'au niveau de l'emplacement 31 du joint 1 afin de comprimer le joint 1 contre la première portée 32 et contre la deuxième portée 33 afin de garantir l'étanchéité du raccord 30.

Ainsi, avant sertissage le fluide traverse le joint 1 par les passages 35 ménagés entre les zones de fuite 6 du joint 1 et la deuxième portée 33 permettant ainsi de détecter fonctionnellement que le raccord 30 n'a pas été serti.

Lors du sertissage en suivant la flèche sur la figure 5, la déformation plastique de la bague 13' entraine une déformation élastique de l'ensemble du joint 1 non seulement dans la direction radiale du joint 1 mais également dans une direction tangentielle au niveau des zones de fuite 6.

Ainsi, la déformation radiale et tangentielle au niveau des zones de fuites 6 obstrue les passages 35 et empêche le fluide de traverser le joint 1 qui devient ainsi étanche.

Cette obstruction des passages 35 est permise de par le choix de la profondeur maximale dₘₐₓ des zones de fuite 6 telle que l'écart de section est compris entre 13 et 27% et idéalement entre 18 et 22% de la section droite principale 4 du joint 1.

Ce choix est donc un compromis entre des passages 35 de dimension suffisante pour permettre la détection d'une fuite de fluide avant le sertissage du raccord 30 et des passages 35 de dimension modeste pour garantir une étanchéité de qualité du raccord 30 après sertissage.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons.

Les tableaux suivants montrent les écarts de section et de volume entre une série de joints à fuite de dimension différente selon l'invention et une série de joints standards de même dimension pour des zones de fuites 6 placées .sur le contour intérieur 2 du joint 1 pour des tubes métalliques (tableau 1) et des zones de fuites 6 placées sur le contour extérieur 3 du joint 1 pour des tubes multicouches (tableau 2).

**Tableau 1 (pour tubes métalliques):**

| DN | Dimension mm | Section tore mm² | Section fuite mm² | Ecart moyen % | Volume joint fuite mm³ | Volume Joint standard mm³ | Ecart moyen % |
|---|---|---|---|---|---|---|---|
| 12 | 12,2x2,4 | 4,52 | 3,91 | -13,49 | 204,4 | 207,5 | -1,49 |
| 14 | 14,2x2,6 | 5,31 | 4,59 | -13,56 | 277 | 280,22 | -1,15 |
| 15 | 15,2x2,6 | 5,31 | 4,59 | -13,56 | 292,68 | 296,9 | -1,42 |
| 16 | 16,2x2,6 | 5,31 | 4,59 | -13,56 | 309 | 313,58 | -1,46 |
| 18 | 18,2x2,6 | 5,31 | 4,59 | -13,56 | 342,32 | 346,94 | -1,33 |
| 22 | 22,3x3,15 | 7,79 | 6,77 | -13,09 | 615,94 | 623,09 | -1,15 |
| 28 | 28,4x3,16 | 7,84 | 6,69 | -14,67 | 768,23 | 777,59 | -1,20 |
| 35 | 35,3x3,16 | 7,84 | 6,69 | -14,67 | 937,98 | 947,6 | -1,02 |
| 42 | 42,4x4,15 | 13,53 | 11,61 | -14,19 | 1958,89 | 1978,13 | -0,97 |
| 54 | 54,4x4,15 | 13,53 | 11,61 | -14,19 | 2467,24 | 2488,07 | -0,84 |
| Moyenne | | | | -*13.85* | | | -1,20 |
| | | | | Fourchet te entre - 8 et -20 % | | | |

**Tableau 2 (pour tubes multicouches):**

| DN | Dimension mm | Section tore mm² | Section fuite mm² | moyen % | Volume Ecart joint fuite mm | Volume Joint standard mm³ | Ecart moyen % |
|---|---|---|---|---|---|---|---|
| 14 | 6,5x1,5 | 1,77 | 1,4 | -20,90 | 43,2 | 44,41 | -2,72 |
| 16 | 8,5x1,5 | 1,77 | 1,4 | -20,90 | 54,25 | 55,52 | -2,29 |
| 18 | 10,5x1,5 | 1,77 | 1,4 | -20,90 | 65,3 | 66,62 | -1,98 |
| 20 | 12x1,5 | 1,77 | 1,4 | -20,90 | 73,6 | 74,95 | -1,80 |
| 26 | 15x2 | 3,14 | 2,5 | -20,38 | 166 | 167,78 | -1,06 |
| 32 | 20,3x2,4 | 4,52 | 3,6 | -20,35 | 320,4 | 322,62 | -0,69 |
| 40 | 27,3x2,4 | 4,52 | 3,6 | -20,35 | 419,8 | 422,1 | -0,54 |
| 50 | 34,59x2,62 | 5,39 | 4,3 | -20,22 | 626 | 630,23 | -0,67 |
| 63 | 45,69x2,62 | 5,39 | 4,3 | -20,22 | 814 | 818,24 | -0,52 |
| Moyenne | | | | *-20,57* | | | -1,36 |
| | | | | Fourchette entre -13 et -27% | | | |

## Revendications

1. Joint annulaire d'étanchéité et de contrôle (1) destiné d'une part à réaliser l'étanchéité entre un tube (11) et une pièce de raccord (12, 13, 13') après une étape de sertissage entre le tube (11) et la pièce de raccord (12, 13, 13'), le tube (11) étant destiné à véhiculer un fluide, ledit joint d'étanchéité étant destiné d'autre part à ménager une fuite d'étanchéité dudit fluide avant l'étape de sertissage de manière à contrôler la réalisation de l'étape de sertissage,
ledit joint d'étanchéité (1) comprenant :
- une section droite (4) dite principale de contour circulaire (5),
- au moins une zone (6) dite de fuite comprenant une pluralité continue de sections droites (7) dont le contour (8) de chacune s'inscrit à l'intérieur du contour circulaire (5) de la section droite principale (4), et agencée pour former un évidement (10) dit de fuite pour le passage du fluide avant sertissage sur un contour (2, 3) du joint d'étanchéité annulaire (1),
ledit joint d'étanchéité (1) étant **caractérisé en ce que** la profondeur maximale (dₘₐₓ) de l'évidement de fuite (10) est telle que l'écart de section entre la section droite principale (4) de contour circulaire (5) et la section droite mesurée au niveau de la profondeur maximale (dₘₐₓ) d'une zone de fuite (6) est compris entre 8 et 27% de la section droite principale (4) de contour circulaire (5), et **en ce que** la profondeur radiale de la pluralité continue de sections droites (7) formant l'au moins un évidement (10) décroit de façon continue depuis un emplacement dans lequel est mesurée la profondeur maximale de l'au moins un évidement (10) jusqu'à au moins un emplacement d'extrémité de l'au moins un évidement (10) dans lequel est mesurée la profondeur minimale de l'au moins un évidement (10).

2. Joint d'étanchéité (1) selon la revendication 1 dans lequel l'au moins une zone de fuite (6) est disposée sur le contour intérieur (2) du joint d'étanchéité annulaire (1).

3. Joint d'étanchéité (1) selon la revendication 2 dans lequel la profondeur maximale de l'évidement de fuite (10) est telle que l'écart de section est compris entre 8 et 20% de la section droite principale (4) de contour circulaire (5).

4. Joint d'étanchéité (1) selon la revendication 3 dans lequel la profondeur maximale de l'évidement de fuite (10) est telle que l'écart de section est compris entre 11 et 15% de la section droite principale (4) de contour circulaire (5).

5. Joint d'étanchéité (1) selon la revendication 1 dans lequel l'au moins une zone de fuite (6) est disposée sur le contour extérieur (3) du joint d'étanchéité annulaire (1).

6. Joint d'étanchéité (1) selon la revendication 5 dans lequel la profondeur maximale de l'évidement de fuite (10) est telle que l'écart de section est compris entre 13 et 27% de la section droite principale (4) de contour circulaire (5).

7. Joint d'étanchéité (1) selon la revendication 6 dans lequel la profondeur maximale de l'évidement de fuite (10) est telle que l'écart de section est compris entre 18 et 22% de la section droite principale, (4) de contour circulaire (5).

8. Joint d'étanchéité (1) selon l'une des revendications 1 à 7 dans lequel le contour (8) de chaque section droite (7) prise dans la zone de fuite (6) comprend une première partie (9a) en arc de cercle de rayon de courbure égal à celui du contour circulaire (5) d'une section droite principale (4) et une deuxième partie (9b) en arc de cercle de rayon de courbure supérieur à celui du contour circulaire (5) d'une section droite principale (4).

9. Joint d'étanchéité (1) selon l'une des revendications 1 à 8 comportant trois zones de fuites (6) dont chacune est séparée d'un écart angulaire de 120° avec les deux autres.

10. Raccord (20, 30) comportant au moins un joint d'étanchéité (1) selon l'une des revendications 1 à 9.

## Patentansprüche

1. Dicht- und Kontrollringdichtung (1), die einerseits dazu bestimmt ist, die Abdichtung zwischen einem Rohr (11) und einem Anschlussteil (12, 13, 13') nach einem Falzschritt zwischen dem Rohr (11) und dem Anschlussteil (12, 13, 13') auszuführen, wobei das Rohr (11) dazu bestimmt ist, ein Fluid zu befördern, wobei die Dichtung andererseits dazu bestimmt ist, ein Abdichtleck des Fluids vor dem Falzschritt derart einzurichten, dass die Ausführung des Falzschritts kontrolliert wird,
wobei die Dichtung (1) Folgendes umfasst:
- einen geraden Abschnitt (4), Hauptabschnitt genannt, mit kreisförmiger Kontur (5),
- mindestens eine Zone (6), Leckzone genannt, die eine kontinuierliche Mehrzahl gerader Abschnitte (7) umfasst, deren Kontur (8) jeweils in das Innere der kreisförmigen Kontur (5) des geraden Hauptabschnitts (4) fällt und die eingerichtet ist, um eine Aussparung (10) des Lecks für das Durchgehen des Fluids vor dem Falzen auf einer Kontur (2, 3) der Ringdichtung (1) zu bilden,
Dichtung (1) **dadurch gekennzeichnet, dass** die maximale Tiefe (dₘₐₓ) der Leckaussparung (10) derart ist, dass der Querschnittunterschied zwischen dem geraden Hauptabschnitt (4) mit kreisförmiger Kontur (5) und dem geraden Abschnitt, der im Bereich der maximalen Tiefe (dₘₐₓ) einer Leckzone (6) gemessen wird, zwischen 8 und 27 % des geraden Hauptabschnitts (4) mit kreisförmiger Kontur (5) liegt, und dass die radiale Tiefe der kontinuierlichen Mehrzahl gerader Abschnitte (7), die die mindestens eine Aussparung (10) bilden, von einer Stelle, an der die maximale Tiefe der mindestens einen Aussparung (10) gemessen wird, bis zu mindestens einer Endstelle der mindestens einen Aussparung (10), in der die minimale Tiefe der mindestens einen Aussparung (10) gemessen wird, kontinuierlich abnimmt.

2. Dichtung (1) nach Anspruch 1, wobei die mindestens eine Leckzone (6) auf der Innenkontur (2) der Ringdichtung (1) angeordnet ist.

3. Dichtung (1) nach Anspruch 2, wobei die maximale Tiefe der Leckaussparung (10) derart ist, dass der Querschnittunterschied zwischen 8 und 28 % des geraden Hauptabschnitts (4) mit kreisförmiger Kontur (5) liegt.

4. Dichtung (1) nach Anspruch 3, wobei die maximale Tiefe der Leckaussparung (10) derart ist, dass der Querschnittunterschied zwischen 11 und 15 % des geraden Hauptabschnitts (4) mit kreisförmiger Kontur (5) liegt.

5. Dichtung (1) nach Anspruch 1, wobei die mindestens eine Leckzone (6) auf der Außenkontur (3) der Ringdichtung (1) angeordnet ist.

6. Dichtung (1) nach Anspruch 5, wobei die maximale Tiefe der Leckaussparung (10) derart ist, dass der Querschnittunterschied zwischen 13 und 27 % des geraden Hauptabschnitts (4) mit kreisförmiger Kontur (5) liegt.

7. Dichtung (1) nach Anspruch 6, wobei die maximale Tiefe der Leckaussparung (10) derart ist, dass der Querschnittunterschied zwischen 18 und 22 % des geraden Hauptabschnitts (4) mit kreisförmiger Kontur (5) liegt.

8. Dichtung (1) nach einem der Ansprüche 1 bis 7, wobei die Kontur (8) jedes geraden Abschnitts (7) in dem Leckbereich genommen (6) einen ersten Teil (9a) in Kreisbogenform mit Krümmungsradius gleich dem der kreisförmigen Kontur (5) eines geraden Hauptabschnitts (4) und einen zweiten Teil (9b) in Kreisbogenform mit Krümmungsradius größer als der der kreisförmigen Kontur (5) eines geraden Hauptabschnitts (4) umfasst.

9. Dichtung (1) nach einem der Ansprüche 1 bis 8, die 3 Leckzonen (6) umfasst, von welchen jede um einen Winkelabstand von 120° zu den zwei anderen beabstandet ist.

10. Anschluss (20, 30), der mindestens eine Dichtung (1) nach einem der Ansprüche 1 bis 9 umfasst.

## Claims

1. A control and sealing annular gasket (1) intended, on the one hand, to carry out the sealing between a tube (11) and a connecting part (12, 13, 13') after a crimping step between the tube (11) and the connecting part (12, 13, 13'), the tube (11) being intended to convey a fluid, said sealing gasket being intended, on the other hand, to arrange a sealing leakage of said fluid before the crimping step so as to control the achievement of the crimping step,
said sealing gasket (1) comprising:
- a straight section (4) called main section with circular contour (5),
- at least one area (6) called leakage area comprising a continuous plurality of straight sections (7) the contour (8) of each fits within the circular contour (5) of the main straight section (4), and arranged to form a recess (10) called leakage recess for the passage of the fluid before crimping onto a contour (2, 3) of the annular sealing gasket (1),
said sealing gasket (1) being **characterized in that** the maximum depth (dₘₐₓ) of the leakage recess (10) is such that the section deviation between the main straight section (4) with circular contour (5) and the straight section measured at the maximum depth (dₘₐₓ) of a leakage area (6) is comprised between 8 and 27% of the main straight section (4) with circular contour (5), and **in that** the radial depth of the continuous plurality of straight sections (7) forming the at least one recess (10) continuously decreases from a location in which the maximum depth of the at least one recess (10) is measured, up to at least one end location of the at least one recess (10) in which the minimum depth of the at least recess (10) is measured.

2. The sealing gasket (1) according to claim 1, wherein the at least one leakage area (6) is disposed on the inner contour (2) of the annular sealing gasket (1).

3. The sealing gasket (1) according to claim 2 wherein the maximum depth of the leakage recess (10) is such that the section deviation is comprised between 8 and 20% of the main straight section (4) with circular contour (5).

4. The sealing gasket (1) according to claim 3 wherein the maximum depth of the leakage recess (10) is such that the section deviation is comprised between 11 and 15% of the main straight section (4) with circular contour (5).

5. The sealing gasket (1) according to claim 1 wherein the at least one leakage area (6) is disposed on the outer contour (3) of the annular sealing gasket (1).

6. The sealing gasket (1) according to claim 5 wherein the maximum depth of the leakage recess (10) is such that the section deviation is comprised between 13 and 27% of the main straight section (4) with circular contour (5).

7. The sealing gasket (1) according to claim 6 wherein the maximum depth of the leakage recess (10) is such that the section deviation is comprised between 18 and 22% of the main straight section (4) with circular contour (5).

8. The sealing gasket (1) according to any of claims 1 to 7 wherein the contour (8) of each straight section (7) taken in the leakage area (6) comprises a first circular-arc portion (9a) of a radius of curvature equal to that of the circular contour (5) of a main straight section (4) and a second circular-arc portion (9b) of a radius of curvature greater than that of the circular contour (5) of a main straight section (4).

9. The sealing gasket (1) according to any of claims 1 to 8 including three leakage areas (6) each of which is separated by an angular deviation of 120° with the two other ones.

10. A connection (20, 30) including at least one sealing gasket (1) according to any of claims 1 to 9.
